# EUROPEAN PATENT SPECIFICATION

(11) **EP 3 880 774 B1**
(45) Date of publication and mention of the grant of the patent: **13.07.2022**
(21) Application number: 19787319.3
(22) Date of filing: 23.10.2019
(51) Int. Cl.: C10M 145/14, C08F 136/06

(54) **PROCESS FOR PREPARING RANDOM COPOLYMERS**
VERFAHREN ZUR HERSTELLUNG VON STATISTISCHEN COPOLYMEREN
PROCÉDÉ DE PRÉPARATION DE COPOLYMÈRES ALÉATOIRES

(30) Priority: 13.11.2018 EP 18205924
(43) Date of publication of application: 22.09.2021
(73) Proprietor: Evonik Operations GmbH, 45128 Essen (DE)
(72) Inventor: PLETSCH, Holger, 60486 Frankfurt (DE); WEILAND, Marius, 46359 Heiden (DE); SCHWEISSINGER, Emily Clare, 44369 Dortmund (DE); EISENBERG, Boris, 64646 Heppenheim (DE)
(74) Representative: Evonik Patent Association
(86) International application number: PCT/EP2019/078865
(87) International publication number: WO 2020/099079

(56) References cited:
- EP-A1- 3 378 877
- GB-A- 112 749
- US-A- 4 533 482
- Anonymous: "Lösungspolymerisation - RÖMPP, Thieme", , 31 August 2008 (2008-08-31), XP055650313, Retrieved from the Internet: URL:https://roempp.thieme.de/roempp4.0/do/ data/RD-12-01491 [retrieved on 2019-12-06]

## Description

### FIELD OF THE INVENTION

The invention relates to a process for preparing random copolymers comprising monomers derived from conjugated dienes and alkyl (meth)acrylates.

### DESCRIPTION OF THE PRIOR ART

The present invention relates to the field of lubrication. Lubricants are compositions that reduce friction between surfaces. In addition to allowing freedom of motion between two surfaces and reducing mechanical wear of the surfaces, a lubricant may also inhibit corrosion of the surfaces and/or may inhibit damage to the surfaces due to heat or oxidation. Examples of lubricant compositions include, but are not limited to, engine oils, transmission fluids, gear oils, industrial lubricating oils, greases and metalworking oils.

A typical lubricant composition includes a base fluid (also referred to as base oils) and optionally one or more additives. Conventional base fluids are naturally occurring hydrocarbons, such as mineral oils, or synthetic compositions, such as poly-alpha-olefins, polyalkyl methacrylates, and ethylenepropylene copolymers.

A wide variety of additives may be combined with the base fluid, depending on the intended use of the lubricant. Examples of lubricant additives include, but are not limited to, oxidation inhibitors, corrosion inhibitors, dispersing agents, high pressure additives, anti-foaming agents and metal deactivators. For improvement of viscometric properties, viscosity index improvers (VII) and thickeners may be used. These viscosity modifiers are usually of polymeric type.

The drawback of adding polymeric additives to a lubricant formulation is that they will undergo shear stress and will mechanically degrade over time. Higher molecular weight polymers are better thickeners but will be more prone to shear stress leading to polymer degradation. The molecular weight of a polymer can be decreased, thereby obtaining a more shear stable polymer. These shear stable low molecular weight polymers are no longer very effective thickeners and must be used in larger concentrations in the lubricant in order to reach a desired viscosity.

Typical polymeric additives are based on polymers of alkyl (meth)acrylates. For example, patent applications EP 0 566 048 A1 and EP 0 471 266 A1 disclose random copolymers of alkyl (meth)acrylates and 1-alkenes having a weight-average molecular weight M_{w} of 1,000 up to 100,000 g/mol and their use as components of lubricant oil compositions.

US patent No. 6,350,723 discloses block copolymers comprising at least one block of alkyl methacrylates including C₁₂₋₃₀ alkyl methacrylates and a block of a polymerized conjugated diene having a number-average molecular weight Mₙ of 15,000 up to 5,000,000 g/mol. The monomers derived from the dienes are selectively hydrogenated. The block copolymers are used as viscosity index improvers.

Japanese patent application JP 2015/143346 discloses a process for the preparation of the copolymerized product of butadiene and (meth)acrylic acid and/or (meth)acrylic acid derivatives. A separately produced catalyst solution is engaged consisting of a mixed solution of 0.1 part of dimethylaluminum (µ-dimethyl)bis(2-phenylindenyl)neodymium), 0.1 part of triphenylcarbonium tetrakis(pentafluorophenyl)borate and 30 parts of toluene). The yield of butadiene-methacrylic acid copolymerization is 50%. However, the catalyst system is complex and expensive. Generally, a simpler process is preferred such as free radical copolymerization.

US 2001/0025078 discloses a process for the preparation of dispersed copolymers comprising the copolymerized product of a conjugated diolefin and a (meth)acrylate by means of emulsion copolymerization. However, disclosed emulsion copolymerization process requires rigorous control of surface tension and pH value.

GB 1,112,749 discloses the polymerization of lauryl methacrylate and butadiene in emulsion activated by AIBN and hydrogenation in the presence of a nickel catalyst. In said emulsion copolymerization process, the reaction is done at low temperature (-5°C) and the work-up is carried out with large volume of solvent with respect to the starting material, which is more difficult to achieve on industrial scale.

Generally, with the intention to yield a non-dispersed polymer in bulk, other preparation methods in homogeneous solution such as free radical copolymerization are preferred over heterogeneous methods such as emulsion copolymerization.

Other examples for preparing copolymers based on conjugated dienes and (meth)acrylates by emulsion polymerization are provided by US 2001/0025078 A1 and US patent No. 4,533,482. US patent No. 4,533,482 discloses the copolymerization of 1,3-butadiene, methylmethacrylate and higher alkyl methacrylate in emulsion in the presence of cumene peroxide, followed by a hydrogenation step. The preferred resulting copolymer is a fully hydrogenated, high molecular weight copolymer of 1,3-butadiene and methyl methacrylate containing at least about 71 mol%- of 1,3-butadiene. The work-up is carried out with large volume of solvent with respect to the starting material, which is more difficult to achieve on industrial scale.

British patent No. 1,165,286 discloses a process for the production of oligomers comprising heating butadiene and/or isoprene with methyl methacrylate in the presence of a ruthenium catalyst and, as solvent, an aliphatic alcohol containing from one to six carbon atoms. Preferred are ruthenium trichloride as catalyst and methanol as solvent. However, a long reaction time of 20 h is necessary in order to obtain the desired oligomer in moderate yield.

### AIM OF THE INVENTION

The present invention aims at providing a process for the preparation of copolymers that can be used as viscosity modifying additives in lubricant compositions. The process should have a high monomer conversion and should result in low cross-linking of the copolymers.

### DETAILED DESCRIPTION OF THE INVENTION

### Process according to the invention

In a first aspect, the invention relates to a process for preparing a random copolymer, the process comprising the steps of
(i) preparing a monomer composition comprising:
   (a) 5 to 55 mol-% of one or more conjugated dienes having 6 carbon atoms or less per molecule;
   (b) 5 to 45 mol-% of one or more C₁-C₆ alkyl(meth)acrylates;
   (c) 10 to 70 mol-% of one or more C₇-C₂₄ alkyl(meth)acrylates;
   (d) 0 to 10 mol-% of one or more esters of (meth)acrylic acid and a hydroxylated hydrogenated polybutadiene; and
   (e) 0 to 10 mol-% of one or more 1-alkenes comprising 6 to 16 carbon atoms,
      based on the total amount of monomers in the monomer composition, and
   (f) 0 to 10 mol-% of monomers selected from the group consisting of styrene monomers having from 8 to 17 carbon atoms, vinyl esters having from 1 to 11 carbon atoms in the acyl group, vinyl ethers having from 1 to 10 carbon atoms in the alcohol group, dispersing oxygen- and/or nitrogen-functionalized monomers, heterocyclic (meth)acrylates, heterocyclic vinyl compounds, monomers containing a covalently bonded phosphorous atom, monomers containing epoxy groups and monomers containing halogens,
(ii) providing a reaction mixture including the monomer composition prepared in step (i) and initiating radical polymerization in the reaction mixture to obtain a random copolymer,
   wherein radical polymerization is performed as solution polymerization and the amount of the monomer composition relative to the total weight of the reaction mixture in step (ii) is at least 20 % by weight,
   wherein the amounts of components (a) to (e) add up to 100 mol-%, based on the total amount of monomers in the monomer composition, and
   wherein the weight-average molecular weight of the random copolymer is in the range of 7,000 to 30,000 g/mol.

Due to the combination of the specific monomer composition and the fact that polymerization is performed by radical solution polymerization, random copolymers can be produced with a high monomer conversion rate.

Unlike the emulsion polymerization process known from the prior art, the process according to the invention has the additional advantage of yielding random copolymers having a relatively low molecular weight. The process is used to prepare random copolymers having a weight-average molecular weight of 7,000 to 30,000 g/mol, preferably 8,000 to 20,000 g/mol. Polymers having this weight-average molecular weight have a particularly high shear resistance and offer good improvements of the viscosimetric properties of a lubricant compositions at low amounts of the copolymer.

The process of the invention has the further advantage of yielding random copolymers with a very low degree of cross-linking and a narrow molecular weight distribution, which further contribute to the shear-resistance of the copolymers. This is reflected in a low polydispersity index of the random copolymers. Preferably, the polydispersity index (PDI) of the copolymers is in the range of 1.5 to 6.0, more preferably 2.0 to 4.0, most preferably 2.2 to 3.2. A polydispersity index in the range of 2.2 to 3.2 is considered optimal for most industrial applications with regard to the shear resistance of the copolymers. The polydispersity index is defined as the ratio of weight-average molecular weight to number-average molecular weight (M_{w}/Mₙ).

The weight-average and number-average molecular weights are determined by gel permeation chromatography using commercially available polybutadiene calibration standards. The determination is preferably performed according to DIN 55672-1 by gel permeation chromatography with THF as eluent.

### Conjugated dienes (component (a))

The monomer composition comprises 5 to 55 mol-% of monomers derived from one or more conjugated dienes having 6 carbon atoms or less per molecule as component (a), based on the total amount of monomers in the monomer composition.

Particularly suitable dienes are butadiene, *cis-* and *trans*-1-methyl-1,3-butadiene (piperylene), 2,3-dimethyl-1,3-butadiene and 2-methyl-1,3-butadiene (isoprene).

In a preferred embodiment, component (a) comprises butadiene or isoprene. Butadiene is most preferred.

Preferably, the monomer composition comprises 15 to 55 mol-%, of one or more conjugated dienes having 6 carbon atoms or less per molecule, based on the total amount of monomers in the monomer composition.

### Alkyl(meth)acrylates (components (b) and (c))

The monomer composition comprises a mixture of monomers derived from C₁-C₆ alkyl(meth)acrylates as component (b) and C₇-C₂₄ alkyl(meth)acrylates as component (c).

The term "(meth)acrylic acid" refers to acrylic acid, methacrylic acid and mixtures of acrylic acid and methacrylic acid; methacrylic acid being preferred. The term "(meth)acrylate" refers to esters of acrylic acid, esters of methacrylic acid or mixtures of esters of acrylic acid and methacrylic acid; esters of methacrylic acid being preferred.

The term "C₁₋₆ alkyl(meth)acrylates" refers to esters of (meth)acrylic acid and straight chain or branched alcohols having 1 to 6 carbon atoms. The term encompasses individual (meth)acrylic esters with an alcohol of a particular length, and likewise mixtures of (meth)acrylic esters with alcohols of different lengths. Similarly, the term "C7-24 alkyl(meth)acrylates" refers to esters of (meth)acrylic acid and straight chain or branched alcohols having 7 to 24 carbon atoms.

Suitable C₁₋₆ alkyl (meth)acrylates for component (b) include, for example, methyl (meth)acrylate, ethyl (meth)acrylate, *n*-propyl (meth)acrylate), *iso*-propyl (meth)acrylate, *n*-butyl (meth)acrylate, *iso*butyl (meth)acrylate and *tert*-butyl (meth)acrylate. Particularly preferred C₁₋₄ alkyl (meth)acrylates are methyl (meth)acrylate and butyl (meth)acrylate.

In a preferred embodiment, component (b) comprises a mixture of methyl (meth)acrylate and butyl (meth)acrylate. More preferably, the butyl (meth)acrylate is *n*-butyl (meth)acrylate.

Suitable C₇₋₂₄ alkyl (meth)acrylates for component (c) include, for example, 2-butyloctyl (meth)acrylate, 2-hexyloctyl (meth)acrylate, decyl (meth)acrylate, 2-butyldecyl (meth)acrylate, 2-hexyldecyl (meth)acrylate, 2-octyldecyl (meth)acrylate, undecyl (meth)acrylate, 5-methylundecyl (meth)acrylate, dodecyl (meth)acrylate, 2-methyldodecyl (meth)acrylate, 2-hexyldodecyl (meth)acrylate, 2-octyldodecyl (meth)acrylate, tridecyl (meth)acrylate, 5-methyltridecyl (meth)acrylate, tetradecyl (meth)acrylate, 2-decyltetradecyl (meth)acrylate, pentadecyl (meth)acrylate, hexadecyl (meth)acrylate, 2-methylhexadecyl (meth)acrylate, heptadecyl (meth)acrylate, 5-isopropylheptadecyl (meth)acrylate, 4-*tert*-butyloctadecyl (meth)acrylate, 5-ethyloctadecyl (meth)acrylate, 3-isopropyloctadecyl (meth)acrylate, octadecyl (meth)acrylate, nonadecyl (meth)acrylate, eicosyl (meth)acrylate, cetyl-eicosyl (meth)acrylate, stearyl-eicosyl (meth)acrylate, docosyl (meth)acrylate, or 2-decyl-tetradecyl (meth)acrylate.

The most preferred C₇₋₂₄ alkyl (meth)acrylates are n-octyl (meth)acrylate, n-decyl (meth)acrylate, n-dodecyl (meth)acrylate, n-tetradecyl (meth)acrylate, n-pentadecyl (meth)acrylate, n-hexadecyl (meth)acrylate, n-octadecyl (meth)acrylate, n-eicosyl (meth)acrylate, n-docosyl (meth)acrylate and n-tetracosyl (meth)acrylate.

In a particularly preferred embodiment, component (c) comprises one or more C₁₀-C₁₆ alkyl(meth)acrylates, which refers to esters of (meth)acrylic acid and straight chain or branched alcohols having 10 to 15 carbon atoms. Preferably, component (c) comprises n-dodecyl (meth)acrylate.

According to the invention, the monomer composition comprises 5 to 45 mol-%, preferably 10 to 40 mol-%, of one or more C₁-C₆ alkyl(meth)acrylates as component (b), based on the total amount of monomers in the monomer composition. Preferably, the monomer composition comprises 10 to 40 mol-% of a mixture of methyl (meth)acrylate and butyl (meth)acrylate as component (b), based on the total amount of monomers in the monomer composition.

According to the invention, the monomer composition comprises 10 to 70 mol-%, preferably 15 to 55 mol-%, of one or more C₇-C₂₄ alkyl(meth)acrylates as component (c), based on the total amount of monomers in the monomer composition, preferably being the one or more C₇-C₂₄ alkyl(meth)acrylates lauryl (meth)acrylate (C₁₂-C₁₅ alkyl (meth)acrylate).

In one embodiment, the monomer composition comprises as part of component (b) 10 to 40 mol-% of a mixture of methyl(meth)acrylate and butyl(meth)acrylate and as part of component (c) 15 to 55 mol% of lauryl methacrylate.

Preferably, the sum of all components (a) to (c) adds up to at least 90 mol-%, more preferably at least 95 mol-%, most preferably to 100 mol-%, based on the total amount of monomers in the monomer composition.

### Esters of (meth)acrylic acid and a hydroxylated hydrogenated polybutadiene (component (d))

The monomer composition may optionally comprise monomers derived from esters of (meth)acrylic acid and one or more hydroxylated hydrogenated polybutadienes as component (d). Because of their high molecular weight, the hydroxylated hydrogenated polybutadienes can also be referred to as macroalcohols in the context of this invention. The resulting esters can also be referred to as macromonomers in the context of this invention.

According to the invention, the monomer composition comprises 0 to 10 mol-%, preferably 0 to 5 mol-%, more preferably 0.1 to 5 mol-% of one or more macromonomers as component (d), based on the total amount of monomers in the monomer composition.

Preferably, the sum of all components (a) to (d) adds up to at least 90 mol-%, more preferably at least 95 mol-%, most preferably to 100 mol-%, based on the total amount of monomers in the monomer composition.

Component (d) may comprise a single type of macromonomer or may comprise a mixture of different macromonomers based on different macroalcohols.

The hydroxylated hydrogenated polybutadienes of component (d) preferably have a number-average molecular weight Mₙ of 500 g/mol to 10,000 g/mol, preferably 700 to 80,000 g/mol, most preferably 2,000 to 5,000 g/mol.

In a preferred embodiment, component (d) is one macromonomer prepared using one macroalcohol having a number average molecular weight of 1,500 to 3,000 g/mol, preferably 1,800 to 2,100 g/mol.

The number-average molecular weight Mₙ is determined by gel permeation chromatography using commercially available polybutadiene standards. The determination is performed according to DIN 55672-1 by gel permeation chromatography with THF as eluent.

Preferably, one or more hydroxylated hydrogenated polybutadienes have a hydrogenation level of at least 99%. The selectivity of the hydrogenation can be probed by, for example, quantitative ¹H nuclear magnetic resonance (¹H NMR) spectroscopy or infrared (IR) spectroscopy. The selectivity of the hydrogenation reaction according to the present invention is measured by ¹H NMR spectroscopy in deuterated chloroform solution relative to the non-hydrogenated starting material by comparing the signal integrals of the respective protons before and after selective hydrogenation reaction. The chemical shifts are calibrated using the solvent signal.

Preferred hydroxylated hydrogenated polybutadienes can be obtained according to GB 2270317.

As used herein, the term "hydroxylated hydrogenated polybutadiene" refers to a hydrogenated polybutadiene that comprises at least one hydroxyl group. The hydroxylated hydrogenated polybutadiene may further comprise additional structural units, such as polyether groups derived from the addition of alkylene oxides to a polybutadiene or a maleic anhydride group derived from the addition of maleic anhydride to a polybutadiene. These additional structural units may be introduced into the polybutadiene when the polybutadiene is functionalized with hydroxyl groups.

Preference is given to monohydroxylated hydrogenated polybutadienes. More preferably, the hydroxylated hydrogenated polybutadiene is a hydroxyethyl- or hydroxypropyl-terminated hydrogenated polybutadiene. Particular preference is given to hydroxypropyl-terminated polybutadienes.

These monohydroxylated hydrogenated polybutadienes can be prepared by first converting butadiene monomers by anionic polymerization to polybutadiene. Subsequently, by reaction of the polybutadiene monomers with an alkylene oxide, such as ethylene oxide or propylene oxide, a hydroxy-functionalized polybutadiene can be prepared. The polybutadiene may also be reacted with more than one alkylene oxide units, resulting in a polyether-polybutadiene block copolymer having a terminal hydroxyl group. The hydroxylated polybutadiene can be hydrogenated in the presence of a suitable transition metal catalyst.

These monohydroxylated hydrogenated polybutadienes can also be selected from products obtained by hydroboration of (co)polymers of having a terminal double bond (e.g. as described in US Patent No. 4,316,973); maleic anhydride-ene-amino alcohol adducts obtained by an ene reaction between a (co)polymer having a terminal double bond and maleic anhydride with an amino alcohol; and products obtained by hydroformylation of a (co)polymer having a terminal double bond, followed by hydrogenation (e.g. as described in JP Publication No. S63-175096).

The macromonomers for use in accordance with the invention can be prepared by transesterification of alkyl (meth)acrylates. Reaction of the alkyl (meth)acrylate with the hydroxylated hydrogenated polybutadiene forms the ester of the invention. Preference is given to using methyl (meth)acrylate or ethyl (meth)acrylate as reactant.

This transesterification is widely known. For example, it is possible for this purpose to use a heterogeneous catalyst system, such as lithium hydroxide/calcium oxide mixture (LiOH/CaO), pure lithium hydroxide (LiOH), lithium methoxide (LiOMe) or sodium methoxide (NaOMe) or a homogeneous catalyst system such as isopropyl titanate (Ti(OiPr)₄) or dioctyltin oxide (Sn(OCt)₂O). The reaction is an equilibrium reaction. Therefore, the low molecular weight alcohol released is typically removed, for example by distillation.

In addition, the macromonomers can be obtained by a direct esterification proceeding, for example, from (meth)acrylic acid or (meth)acrylic anhydride, preferably under acidic catalysis by p-toluenesulfonic acid or methanesulfonic acid, or from free methacrylic acid by the DCC method (dicyclohexylcarbodiimide).

Furthermore, the present hydroxylated hydrogenated polybutadiene can be converted to an ester by reaction with an acid chloride such as (meth)acryloyl chloride.

Preferably, in the above-detailed preparations of the esters of the invention, polymerization inhibitors are used, for example the 4-hydroxy-2,2,6,6-tetramethylpiperidinooxyl radical and/or hydroquinone monomethyl ether.

### 1-Alkenes (component (e))

The monomer composition may optionally comprise monomers derived from 1-alkenes having 6 to 16 carbon atoms as component (e). The 1-alkenes may be branched or linear and may comprise more than one unsaturated bond. In the case of 1-alkenes comprising more than one unsaturated bond, the monomer units derived from these 1-alkenes are preferably also hydrogenated as described above for the conjugated dienes.

Suitable 1-alkenes are, for example, 1-hexene, 1-octene, 1-decene and 1-docadecene. In a preferred embodiment, component (e) comprises 1-decene.

According to the invention, the monomer composition comprises 0 to 10 mol-%, preferably 0 to 5 mol-%, more preferably 0.1 to 5 mol-% of one or more 1-alkenes having 6 to 16 carbon atoms as component (e), based on the total amount of monomers in the monomer composition.

Preferably, the sum of all components (a) to (e) adds up to at least 90 mol-%, more preferably at least 95 mol-%, most preferably to 100 mol-% based on the total amount of monomers in the monomer composition.

### Additional monomers (component (f))

The monomer composition comprises 0 to 10 mol-% of monomers (f), based on the total amount of monomers in the monomer composition, in addition to the components (a) to (e) described above, which are selected from the group consisting of styrene monomers having from 8 to 17 carbon atoms, vinyl esters having from 1 to 11 carbon atoms in the acyl group, vinyl ethers having from 1 to 10 carbon atoms in the alcohol group, dispersing oxygen- and/or nitrogen-functionalized monomers, heterocyclic (meth)acrylates, heterocyclic vinyl compounds, monomers containing a covalently bonded phosphorous atom, monomers containing epoxy groups and monomers containing halogens.

Suitable styrene monomers having from 8 to 17 carbon atoms are selected from the group consisting of styrene, substituted styrenes having an alkyl substituent in the side chain, for example alphamethylstyrene and alpha-ethylstyrene, substituted styrenes having an alkyl substituent on the ring, such as vinyltoluene and para-methylstyrene, halogenated styrenes, for example monochlorostyrenes, dichlorostyrenes, tribromostyrenes and tetrabromostyrenes, nitrostyrene; styrene being preferred.

Suitable vinyl esters having from 1 to 11 carbon atoms in the acyl group are selected from the group consisting of vinyl formate, vinyl acetate, vinyl propionate, vinyl butyrate; preferably vinyl esters including from 2 to 9, more preferably from 2 to 5 carbon atoms in the acyl group, wherein the acyl group may be linear or branched.

Suitable vinyl ethers having from 1 to 10 carbon atoms in the alcohol group are selected from the group consisting of vinyl methyl ether, vinyl ethyl ether, vinyl propyl ether, vinyl butyl ether; preferably vinyl ethers including from 1 to 8, more preferably from 1 to 4 carbon atoms in the alcohol group, wherein the alcohol group may be linear or branched.

Suitable dispersing oxygen- and/or nitrogen-functionalized monomers are selected from the group consisting of aminoalkyl (meth)acrylates, such as N,N-dimethylaminoethyl (meth)acrylate, N,N-dimethylaminopropyl (meth)acrylate, N,N-diethylaminopentyl (meth)acrylate, N,N-dibutylaminohexadecyl (meth)acrylate; aminoalkyl(meth)acrylamides, such as N,N-dimethylaminopropyl(meth)acrylamide; hydroxyalkyl (meth)acrylates, such as 3-hydroxypropyl (meth)acrylate, 3,4-dihydroxybutyl (meth)acrylate, 2-hydroxyethyl (meth)acrylate, 2-hydroxypropyl (meth)acrylate, 2,5-dimethyl-1,6-hexanediol (meth)acrylate, 1,10-decanediol (meth)acrylate, p-hydroxystyrene, vinyl alcohol, alkenols ((methyl)allyl alcohol having 3 to 12 carbon atoms, multivalent (3-8 valent) alcohol (glycerol, pentaerythritol, sorbitol, sorbitan, doglycerides, sugars) ether or meth(acrylate); C₁₋₈-alkyloxy-C₂₋₄-alkyl (meth)acrylates, such as methoxypropyl (meth)acrylate, methoxy-butyl (meth)acrylate, methoxy heptyl (meth)acrylate, methoxy hexyl (meth)acrylate, methoxy pentyl (meth)acrylate, methoxy octyl (meth)acrylate, ethoxyethyl (meth)acrylate, ethoxypropyl (meth)acrylate, ethoxy-butyl (meth)acrylate, ethoxy heptyl (meth)acrylate, ethoxyhexyl (meth)acrylate, ethoxypentyl (meth)acrylate, ethoxyoctyl (meth) acrylate, proxymethyl (meth)acrylate, proxyethyl (meth)acrylate, proxypropyl (meth)acrylate, proxybutyl (meth)acrylate, proxyheptyl (meth)acrylate, proxyhexyl (meth)acrylate, proxypentyl (meth)acrylate, proxyoctyl (meth)acrylate, butoxymethyl (meth)acrylate, butoxyethyl (meth)acrylate, butoxypropyl (meth)acrylate, butoxybutyl (meth)acrylate, butoxyheptyl (meth)acrylate, butoxyhexyl (meth)acrylate, butoxypentyl (meth)acrylate and butoxyoctyl (meth)acrylate, ethoxyethyl (meth)acrylate and butoxyethyl (meth)acrylate are being preferred.

Suitable heterocyclic (meth)acrylates are selected form the group consisting of 2-(1-imidazolyl)ethyl (meth)acrylate, 2-(4-morpholinyl)ethyl (meth)acrylate, 1-(2-methacryloyloxyethyl)-2-pyrrolidone, N-methacryloylmorpholine, N-methacryloyl-2-pyrrolidinone, N-(2-methacryloyloxyethyl)-2-pyrrolidinone, N-(3-methacryloyloxypropyl)-2-pyrrolidinone.

Suitable heterocyclic vinyl compounds are selected from the group consisting of 2-vinylpyridine, 4-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, N-vinylpyrrolidine, 3-vinylpyrrolidine, N-vinyl-caprolactam, N-vinylbutyrolactam, vinyloxolane, vinylfuran, vinyloxazoles and hydrogenated vinyloxazoles.

Monomers containing a covalently bonded phosphorous atom are selected from the group consisting of 2-(dimethylphosphato)propyl (meth)acrylate, 2-(ethylenephosphito)propyl (meth)acrylate, dimethylphosphinomethyl (meth)acrylate, dimethylphosphonoethyl (meth)acrylate, diethyl(meth)acryloyl phosphonate, dipropyl(meth)acryloyl phosphate, 2 (dibutylphosphono)ethyl (meth)acrylate, diethylphosphatoethyl (meth)acrylate, 2-(dimethylphosphato)-3-hydroxypropyl (meth)acrylate, 2-(ethylenephosphito)-3-hydroxypropyl (meth)acrylate, 3-(meth)acryloyloxy-2-hydroxypropyl diethyl phosphonate, 3-(meth)acryloyloxy-2-hydroxypropyl dipropyl phosphonate, 3-(dimethylphosphato)-2-hydroxypropyl (meth)acrylate, 3-(ethylenephosphito)-2-hydroxypropyl (meth)acrylate, 2-(meth)acryloyloxy-3-hydroxypropyl diethyl phosphonate, 2-(meth)acryloyloxy-3-hydroxypropyl dipropyl phosphonate and 2 (dibutylphosphono)- 3-hydroxypropyl (meth)acrylate.

Suitable monomers containing epoxy groups are, for example, glycidyl (meth)acrylate and glycidyl (meth)allyl ether and the like.

Monomers containing halogens are, for examples, such as vinyl chloride, vinyl bromide, vinylidene chloride, (meth)allyl chloride and halogenated styrene (dichlorostyrene etc) and the like.

The most preferred additional monomers (f) are selected from styrene monomers having from 8 to 17 carbon atoms, hydroxyethyl(meth)acrylate, N,N-dimethylaminoethyl (meth)acrylate, N,N-dimethylaminopropyl (meth)acrylate or a mixture thereof.

According to the invention, the amount of additional monomers (f) is limited to 0 to 10 mol-%, preferably 0 to 8 mol-%, more preferably 0 to 6 mol-%, based on the total amount of monomers in the monomer composition.

According to the invention, the sum of all components (a) to (f) adds up to 100 mol-% based on the total amount of monomers in the monomer composition.

### Preferred monomer compositions

In a preferred embodiment, the monomer composition comprises
(a) 15 to 55 mol-% of one or more conjugated dienes having 6 carbon atoms or less per molecule;
(b) 10 to 40 mol-% of one or more C₁-C₆ alkyl(meth)acrylates;
(c) 15 to 55 mol-% of one or more C₇-C₂₄ alkyl(meth)acrylates;
(d) 0 to 5 mol-% of one or more esters of (meth)acrylic acid and a hydroxylated hydrogenated polybutadiene; and
(e) 0 to 5 mol-% of one or more 1-alkenes comprising 6 to 16 carbon atoms,
   based on the total amount of monomers in the monomer composition.

In a further preferred embodiment, the monomer composition comprises
(a) 15 to 55 mol-% of one or more conjugated dienes having 6 carbon atoms or less per molecule;
(b) 10 to 40 mol-% of one or more C₁-C₆ alkyl(meth)acrylates;
(c) 15 to 55 mol-% of one or more C₇-C₂₄ alkyl(meth)acrylates;
(d) 0.1 to 5 mol-% of one or more esters of (meth)acrylic acid and a hydroxylated hydrogenated polybutadiene; and
(e) 0 to 5 mol-% of one or more 1-alkenes comprising 6 to 16 carbon atoms,
   based on the total amount of monomers in the monomer composition.

In another further preferred embodiment, the monomer composition comprises
(a) 15 to 55 mol-% of one or more conjugated dienes having 6 carbon atoms or less per molecule;
(b) 10 to 40 mol-% of one or more C₁-C₆ alkyl(meth)acrylates;
(c) 15 to 55 mol-% of one or more C₇-C₂₄ alkyl(meth)acrylates;
(d) 0 to 5 mol-% of one or more esters of (meth)acrylic acid and a hydroxylated hydrogenated polybutadiene; and
(e) 0.1 to 5 mol-% of one or more 1-alkenes comprising 6 to 16 carbon atoms,
   based on the total amount of monomers in the monomer composition.

Preferably, the amounts of components (a) to (e) add up to at least 90 mol-%, more preferably at least 95 mol-%, most preferably to 100 mol-%, based on the total amount of monomers in the monomer composition.

In another preferred embodiment, the monomer composition comprises
(a) 15 to 55 mol-% of one or more conjugated dienes having 6 carbon atoms or less per molecule;
(b) 10 to 40 mol-% of one or more C₁-C₆ alkyl(meth)acrylates;
(c) 15 to 55 mol-% of one or more C₇-C₂₄ alkyl(meth)acrylates;
(d) 0 to 5 mol-% of one or more esters of (meth)acrylic acid and a hydroxylated hydrogenated polybutadiene;
(e) 0 to 5 mol-% of one or more 1-alkenes comprising 6 to 16 carbon atoms; and
(f) 0 to 6 mol-% of one or more additional monomers (f) as listed above, preferably styrene monomers having from 8 to 17 carbon atoms, hydroxyethyl(meth)acrylate, N,N-dimethylaminoethyl (meth)acrylate, N,N-dimethylaminopropyl (meth)acrylate or a mixture thereof,
   based on the total amount of monomers in the monomer composition.

According to the invention, the sum of all components (a) to (f) adds up to 100 mol-% based on the total amount of monomers in the monomer composition.

### Random architecture

The copolymers prepared according to the claimed process are of random architecture. The random architecture of the copolymers can be probed by measuring the glass transition temperature T_{g} using differential scanning calorimetry (DSC). The random copolymers - in contrast to block copolymers or gradient copolymers - typically possess a single conjunct glass transition temperature T_{g}.

### Radical polymerization

Several processes for the preparation of copolymers from conjugated dienes and alkyl (meth)acrylates are known, such as free radical copolymerization, controlled radical copolymerization, emulsion polymerization and anionic polymerization. A comprehensive overview over free radical (co)polymerization and controlled radical (co)polymerization methods is for example provided in K. Matyjaszewski, T. P. Davis, Handbook of Radical Polymerization, 2002, John Wiley & Sons, Inc., Hoboken, USA. A comprehensive overview over emulsion (co)polymerization methods is for example provided in C.-S. Chern, Principles and Applications of Emulsion Polymerization, 2008, John Wiley & Sons, Inc., Hoboken, USA. A comprehensive overview over anionic (co)polymerization is for example provided in H. L. Hsieh, R. P. Quirk, Anionic Polymerization. Principles and Practical Applications, 1996, Marcel Dekker, Inc., New York, USA.

Usually polymerization processes performed using comonomers such as alkyl methacrylate and conjugated dienes are complicated to perform due to the potential risks such as instant generation of heat, cross-linking tendency and the inhomogeneous conversion of comonomers.

According to the present invention, a free radical random copolymerization process is used. Anionic polymerization is disfavored on industrial scale because of severe requirements on the purity of the raw materials. Block copolymerization is also disfavored as the block type polymeric architectures produced can lead to disfavored solubility and higher undesired crystallization tendency in comparison to the random type polymeric architecture observed during free radical random copolymerization. The free radical polymerization process according to the invention, however, allows for the synthesis of random copolymers in a simple and inexpensive manner with the use of commercially available components.

After extensive investigations, the inventors of the present invention found out that a random copolymer as described in the present invention could be prepared in good yield and high monomer conversion by carrying out free radical copolymerization with the correct monomer composition.

According to the present invention, the radical polymerization is performed by solution polymerization. The reaction mixture during step (ii) preferably is a single-phase composition and in the case of solution polymerization, then the monomers and/or the resulting random copolymer are soluble in the solubilizing carrier medium used for the solution polymerization.

Solution polymerization is the preferred method for carrying out the process of the invention, because it allows adjusting the concentration of the monomer composition in the reaction mixture by adding more or less solubilizing carrier medium. By selecting the correct concentration of the monomer composition in the reaction mixture, the molecular weight and the polydispersity index of the resulting copolymer can be controlled.

In the case of solution polymerization, the reaction mixture during step (ii) preferably consists of the monomer composition, a solubilizing carrier medium as described below, and one or more radical initiators. Optionally one or more chain transfer agents may be used during polymerization.

According to the present invention, the total amount of monomer composition in the reaction mixture is at least 20 % by weight, based on the total weight of the reaction mixture. Preferably, the total amount of monomer composition in the reaction mixture is 20 to 70 % by weight, more preferably 20 to 45 % by weight, and even more preferably 30 to 45 % by weight, based on the total weight of the reaction mixture. A concentration of the monomer composition in the range of 20 to 45 % by weight, preferably 30 to 45 % by weight, based on the total weight of the reaction mixture, is considered optimal, because it yields random copolymers having a low weight-average molecular weight in the range of 8,000 to 20,000 g/mol and a low polydispersity index in the range of 2.2 to 3.2.

The polymerization step (ii) is preferably performed at a temperature of 20°C to 200°C, more preferably 50°C to 150°C.

The reaction pressure is preferably 1 bar to 30 bar, more preferably 10 bar to 28 bar.

Preferably, the total reaction time of the radical polymerization is 1 to 10 hours.

In a preferred embodiment, the polymerization step (ii) is carried out in the presence of toluene and a radical initiator at a temperature of 90°C to 130°C, preferably 110 to 130°C, a pressure of 12 bar to 25 bar, preferably 15 bar to 23 bar and a total reaction time of 2 to 9 hours, preferably 3 to 7 hours.

After completion of the radical polymerization, the product is preferably filtered to remove any impurities present in the reaction mixture, followed by the evaporation of any volatile solvents. In this step, there is no need to add any additional solvent at the end of the reaction.

### Solubilizing carrier medium

In a preferred embodiment, the reaction mixture in step (ii) comprises a solubilizing carrier medium.

Preferably, the solubilizing carrier medium is selected from the group consisting of mineral oils, synthetic oils, ketones, ester solvents, aromatic hydrocarbons, cycloaliphatic hydrocarbons and aliphatic hydrocarbons or mixtures thereof.

Examples for mineral oils are paraffinic oils, naphthenic oils, solvent-refined oils, isoparaffin-containing high VI oils and hydrocracked high VI oils. Examples for synthetic oils are organic esters, for example diesters and polyesters, like carboxylic esters and phosphate esters; organic ethers like silicone oils, perfluoro-alkyl ethers and polyalkylene glycol; and synthetic hydrocarbons, especially polyolefins and Gas to Liquids oils (GTL). Examples for ketones are butanone and methyl ethyl ketone. Examples for ester solvents are fatty oils, and synthetic ester lubricants (for example, di-C4-12 alkyl C4-12 dicarboxylates, such as dioctyl sebacate and dioctyl adipate, polyol poly-C4-12 alkanoates, such as pentaerythritol tetra-caproate; and tri-C4-12 hydrocarbyl phosphates, such as tri-2-ethylhexyl phosphate, dibutyl phenyl phosphate, di-2-ethylhexyl phenyl phosphate, 2-ethylhexyl diphenyl phosphate and tricresyl phosphate). Examples for aromatic hydrocarbons are benzene, toluene, xylene, ethylbenzene, trimethyl benzene, ethyl toluene and mixtures of them. Examples for cycloaliphatic hydrocarbons are cyclohexane, methyl cyclohexane and cycloaliphatic terpenes. Examples for aliphatic hydrocarbons are n-pentane, n-hexane, n-heptane, 1-decene and aliphatic terpenes.

In a preferred embodiment, the solubilizing carrier medium is a cycloaliphatic or aliphatic or aromatic hydrocarbon, preferably cyclohexane, 1-decene or toluene, even more preferably cyclohexane or toluene.

### Radical initiator

Step (ii) comprises the addition of a radical initiator.

The radical initiator is preferably added to the reaction mixture in step (ii) once the reaction mixture has been heated to the desired reaction temperature. Preferably, the radical initiator is added to the reaction mixture during step (ii) at a reaction temperature of 90 to 130°C, more preferably 110 to 130°C and most preferably 120°C.

Suitable radical initiators are, for example, azo initiators, such as azobis-isobutyronitrile (AIBN), 2,2'-azobis(2-methylbutyronitrile) (AMBN) and 1,1-azobiscyclohexanecarbonitrile, and peroxy compounds such as methyl ethyl ketone peroxide, acetylacetone peroxide, dilauryl peroxide, ketone peroxide, *tert*-butyl peroctoate, methyl isobutyl ketone peroxide, cyclohexanone peroxide, dibenzoyl peroxide, *tert*-butyl peroxybenzoate, *tert*-butyl peroxyisopropylcarbonate, 2,5-bis(2-ethylhexanoylperoxy)-2,5-dimethylhexane, *tert*-butyl peroxy-3,5,5-trimethylhexanoate, dicumyl peroxide, 1,1-bis(*tert*-butylperoxy)cyclohexane, 1,1-bis(*tert*-butylperoxy)-3,3,5-trimethylcyclohexane, cumyl hydroperoxide, *tert*-butyl hydroperoxide and bis(4-*tert*-butylcyclohexyl) peroxydicarbonate.

In a preferred embodiment, the radical initiator is selected from the group consisting of peroxide initiators and azo initiators or mixtures thereof.

Preferably, the radical initiator is selected from the group consisting of 2,2'-azobis(2-methylbutyronitrile), 2,2-bis(tert-butylperoxy)butane, 1,1-di-*tert*-butylperoxy-3,3,5-trimethylcyclohexane, *tert*-butyl peroxybenzoate and *tert*-butylperoxy-3,5,5-trimethylhexanoate. In a particularly preferred embodiment the radical initiator is 2,2-bis(tert-butylperoxy)butane.

Preferably, the total amount of radical initiator relative to the total weight of the monomer composition is 0.01 to 5 % by weight, more preferably 0.02 to 1 % by weight, most preferably 0.05 to 0.5 % by weight.

The total amount of radical initiator may be added in a single step or the radical initiator may be added in several steps over the course of the polymerization reaction. Preferably, the radical initiator is added in several steps. Most preferably, the radical initiator is added in two steps. For example, a part of the radical initiator may be added to initiate radical polymerization and a second part of the radical initiator may be added 0.5 to 3.5 hours after the initial dosage.

If the radical initiator is added in two steps, the first portion of radical initiator consists of 50 to 90 % by weight, preferably 60 to 90 % by weight, more preferably 70 to 90 % by weight, even more preferably 80wt% of the total amount of radical initiator. The second portion then contains the remaining amount of radical initiator.

### Chain transfer agent

Step (ii) optionally comprises the addition of a chain transfer agent. Usually, chain transfer agents are used to control the molecular weight and/or the molecular weight distribution. This technology is well-known and practiced in the polymer industry and is described in Odian, Principles of Polymerization, 1991. Examples of chain transfer agents are sulfur containing compounds such as thiols, e.g. n- and t-dodecanethiol; 2-mercaptoethanol, and mercapto carboxylic acid esters, e.g. methyl-3-mercaptopropionate; terpenes, e.g. 1-methyl-4-(propan-2-ylidene)cyclohex-1-ene; or longer chain alkenes. Preferred chain transfer agents are alkenes having up to 20 carbon atoms, especially up to 15 carbon atoms and more preferably up to 12 carbon atoms. Particularly preferred is the addition of 1-decene.

### Hydrogenation

The process according to the invention may further comprise as optional step (iii) the hydrogenation of the random copolymer obtained in step (ii).

Hydrogenation is preferably selective and only affects the monomer units derived from the conjugated dienes (a). Preferably, the hydrogenation does not affect the other monomer units (b) to (f).

The selectivity of the hydrogenation can be probed as described above by quantitative ¹H nuclear magnetic resonance (¹H NMR) spectroscopy or infrared (IR) spectroscopy. An alternative measure to determine the hydrogenation level of the copolymer is the iodine number. The iodine number refers to the number of grams of iodine which can be added onto 100 g of polymer. Preferably, the hydroxylated hydrogenated polybutadienes have an iodine number of not more than 5 g of iodine per 100 g of polymer. The iodine number is determined by the Wijs method according to DIN 53241-1:1995-05.

Preferably, the hydrogenation degree, in relation to the polymerized units derived from conjugated dienes, is >95%. The hydrogenation degree is defined as the molar degree of saturation of carbon-carbon bonds of the polymerized units derived from conjugated dienes through addition of hydrogen relative to the non-hydrogenated starting material. The degree of hydrogenation of the random copolymer obtained by the process of the present invention is measured by ¹H NMR spectroscopy in deuterated chloroform solution using dimethyl terephthalate as standard. The chemical shifts are calibrated using the solvent signal. To determine the hydrogenation degree, the respective signal integrals of the standard are put into relation with the signal integrals of the olefinic protons. It is necessary for each sample to repeat the measurement and determination using a non-hydrogenated reference sample in order to define 0% degree of hydrogenation.

Hydrogenation preferably performed in the presence of hydrogen gas or other hydrogen sources in the presence of a heterogeneous insoluble, supported metal or metal complex catalyst or in the presence of a homogenous soluble, organometallic catalyst. Heterogeneous catalysts are preferred and are, for example, described in US 3,541,064 (A) and GB 1,030,306.

Typical catalytically active metals for heterogeneously catalyzing the selective hydrogenation according to the invention include, but are not limited to, Ru, Rh, Pd, Ir, Pt, Mn, Cr, Fe, Co, Ni, U, Cu, Nd, In, Sn, Zn, Ag, Cr and alloys of one or more of these metals. Catalysts containing Pd are particularly preferred.

Typical catalyst supports include, but are not limited to oxides (Al2O3, TiO2, SiO2 or others), carbon, kieselguhr or other carriers.

The selective hydrogenation process according to the present invention is preferably performed using a heterogeneous carbon-supported Pd catalyst.

The heterogeneous catalysts can be used, for example, in the form of pellets or powders. Powders are particularly preferred.

The amount of catalytically active metal loaded on the support preferably is 0.1 to 10 % by weight, more preferably 1 to 10 % by weight, based on the total weight of the supported catalyst.

Preferably, the copolymer subjected to hydrogenation is provided in a composition further including a solubilizing carrier medium.

Preferably, the solubilizing carrier medium is selected from the group consisting of mineral oils, synthetic oils, ketones, ester solvents, aromatic hydrocarbons, cycloaliphatic hydrocarbons and aliphatic hydrocarbons or mixtures thereof.

Examples for mineral oils are paraffinic oils, naphthenic oils, solvent-refined oils, isoparaffin-containing high VI oils and hydrocracked high VI oils. Examples for synthetic oils are organic esters, for example diesters and polyesters, like carboxylic esters and phosphate esters; organic ethers like silicone oils, perfluoro-alkyl ethers and polyalkylene glycol; and synthetic hydrocarbons, especially polyolefins and Gas to Liquids oils (GTL). Examples for ketones are butanone and methyl ethyl ketone. Examples for ester solvents are fatty oils, and synthetic ester lubricants (for example, di-C4-12 alkyl C4-12 dicarboxylates, such as dioctyl sebacate and dioctyl adipate, polyol poly-C4-12 alkanoates, such as pentaerythritol tetra-caproate; and tri-C4-12 hydrocarbyl phosphates, such as tri-2-ethylhexyl phosphate, dibutyl phenyl phosphate, di-2-ethylhexyl phenyl phosphate, 2-ethylhexyl diphenyl phosphate and tricresyl phosphate). Examples for aromatic hydrocarbons are benzene, toluene, xylene, ethylbenzene, trimethyl benzene, ethyl toluene and mixtures of them. Examples for cycloaliphatic hydrocarbons are cyclohexane, methyl cyclohexane and cycloaliphatic terpenes. Examples for aliphatic hydrocarbons are n-pentane, n-hexane, n-heptane, 1-decene and aliphatic terpenes.

In a preferred embodiment, hydrogenation is carried out in the presence of a cycloaliphatic or aliphatic hydrocarbon, preferably cyclohexane.

In the case that hydrogen gas is used as a reducing agent, the reaction pressure preferably is between 5 and 1500 bar, either as constant or gradient pressure. More preferably, the reaction pressure is 5 to 500 bar, even more preferably 10 to 300 bar, and most preferably 15 to 250 bar.

The reaction temperature preferably is 20 to 200°C, more preferably 20 to 150°C, even more preferably 20 to 130°C and most preferably 20 to 120°C.

In a preferred embodiment, hydrogenation is carried out in the presence of cyclohexane and a carbon-supported Pd catalyst at a temperature of 60 to 130°C, preferably 80 to 120°C, and a pressure of 70 to 120 bar, preferably 80 to 100 bar.

### EXAMPLES

The invention is illustrated by the following examples.

### Test methods

The weight-average molecular weight M_{w} and the polydispersity index PDI of the random copolymers of the invention were determined using a Tosoh EcoSEC GPC system "HLC-8320" equipped with a PSS SDV 5µm pre-column and a 30 cm PSS SDV 5µm linear S separation column, as well as an RI detector at a flow rate of 0.3 mL/min at T = 40 °C with tetrahydrofuran (THF) as eluent against polybutadiene calibration standards.

The conversion rate corresponds to the weight of monomers incorporated into the copolymer relative to the total weight of the initial monomer mixture. The conversion rate was determined by gravimetric analysis, wherein the total weight of the dried polymer is calculated against the total feed amount of the monomer.

### Preparation of the non-hvdroqenated copolymers

The monomers indicated in Table 1 were mixed with toluene at a temperature of 20 °C and a pressure of 10 bar in a 5 L autoclave so that the concentration of the monomers relative to the total weight of the mixture is 40% by weight. The temperature was increased to 120 °C using a heat rate of 5.5 °C/min, before the initiator, 2,2-bis(tert-butylperoxy)butane (50% by weight in liquid paraffin) was added. Free radical copolymerization was performed at a reaction temperature of 120 °C, a reaction pressure of 20 bar and a reaction time of 4 h. The discharge was filtered and volatile solvents were evaporated.

In the examples below, the amount of initiator is calculated based on the total amount of monomers in the reaction mixture.

Example 1 was prepared according to the general procedure except that the initiator was added in two steps. Firstly, 80% of the initiator was added, followed by a second addition of 20% initiator after a reaction time of 2 hours. The work-up was also carried out in the presence of BHT (2,6-di-tert-butyl-4-methylphenol).

Examples 2 and 6 were prepared according to the general procedure except that the initiator was added in two steps. Firstly, 80% of the initiator was added, followed by a second addition of 20% initiator after a reaction time of 2 hours. Furthermore, after 4 hours the reaction temperature was increased to 130 °C for 30 minutes.

Example 3 was prepared according to the general procedure except that the initiator was added in two steps and the monomer composition comprises additionally a macromonomer d). Firstly, 80% of the initiator was added, followed by a second addition of 20% initiator after a reaction time of 2 hours. Furthermore, after 4 hours the reaction temperature was increased to 130 °C for 30 minutes.

Example 4 was prepared according to the general procedure except that butadiene was replaced by isoprene and the initiator was added in two steps. Firstly, 80% of the initiator was added, followed by a second addition of 20% initiator after a reaction time of 2 hours. Furthermore, after 4 hours the reaction temperature was increased to 130 °C for 30 minutes.

Examples 5 and 7 were prepared according to the general procedure except that the initiator was added in two steps. Firstly, 80% of the initiator was added, followed by a second addition of 20% initiator after a reaction time of 2 hours. Furthermore, after 4 hours the reaction temperature was increased to 130 °C for 30 minutes. The reaction was carried out in 1-decene.

Example 8 was prepared according to the general procedure except that the initiator was added in two steps. Firstly, 80% of the initiator was added, followed by a second addition of 20% initiator after a reaction time of 2 hours. Furthermore, after 4 hours the reaction temperature was increased to 130 °C for 30 minutes. The reaction was carried out in cyclohexane.

Example 9 was prepared according to the general procedure except the reaction was carried out at a higher monomer concentration of 50%. Firstly, 80% of the initiator was added, followed by a second addition of 20% initiator after a reaction time of 2 hours. Furthermore, after 4 hours the reaction temperature was increased to 130 °C for 30 minutes.

Comparative example 10 was prepared according to the general procedure except that the initiator was added in two steps. Firstly, 80% of the initiator was added, followed by a second addition of 20% initiator after a reaction time of 2 hours. Furthermore, after 4 hours the reaction temperature was increased to 130 °C for 30 minutes. The reaction was carried out at 10% monomer concentration.

Comparative example 11 was prepared according to the general procedure except that the initiator was added in one step. Furthermore, the reaction was carried out for 1 hour. The monomer composition of this example did not include any C₇-C₂₄ alkyl(meth)acrylate.

Comparative example 12 was prepared according to the general procedure except that the initiator was added in two steps. Firstly, 80% of the initiator was added, followed by a second addition of 20% initiator after a reaction time of 2 hours. Furthermore, after 4 hours the reaction temperature was increased to 130 °C for 30 minutes. The monomer composition comprises only butadiene.

**Table 1: Preparation of copolymers**

| **Example** | **1** | **2** | **3** | **4** | **5** | **6** | **7** | **8** | **9** | **10^{c}** | **11^{c}** | **12^{c}** |
|---|---|---|---|---|---|---|---|---|---|---|---|---|
| Monomer concentration [%] | 40 | 40 | 40 | 40 | 40 | 40 | 40 | 40 | 50 | 10 | 40 | 40 |
| Butadiene [g] | 243 | 276 | 237 | - | 173 | 76 | 177 | 317 | 231 | 52 | 435 | 753 |
| [mol-%]^{b} | 50 | 50 | 49 | - | 18 | 15 | 26 | 43 | 41 | 42 | 55 | 100^{d} |
| Isoprene [g] | - | - | - | 292 | - | - | - | - | - | - | - | - |
| [mol-%]^{b} | - | - | - | 50 | - | - | - | - | - | - | - | - |
| Methyl methacrylate [g] | 65.8 | 201.6 | 107.2 | 63 | 95.9 | 64.9 | 121.3 | 157.2 | 132 | 27 | 457 | - |
| [mol-%]^{b} | 7 | 20 | 12 | 7.5 | 17 | 21 | 15 | 20 | 12 | 12 | 31 | - |
| Butyl methacrylate [g] | 94 | 71.6 | 152 | 89.5 | 136.3 | 91.5 | 172.2 | 225.1 | 187 | 37 | 278 | - |
| [mol-%]^{b} | 7 | 5 | 12 | 7.5 | 14 | 16 | 17 | 15 | 12 | 11 | 14 | - |
| Lauryl methacrylate [g] | 812.7 | 660.6 | 542.7 | 749 | 683.1 | 983.4 | 614.5 | 401 | 937 | 198 | - | - |
| [mol-%]^{b} | 35 | 25 | 24 | 35 | 51 | 47 | 42 | 21.0 | 35 | 34 | - | - |
| Macromonomer^{a} [g] | - | - | 172.1 | - | - | - | - | - | - | - | - | - |
| [mol-%]^{b} | - | - | 3 | - | - | - | - | - | - | - | - | - |
| Toluene [g] | 1778 | 1777 | 1785 | 1787 | - | 1820 | - | - | 1484 | 1647 | 1750 | 1129 |
| 1-decene [g] | - | - | - | - | 1612 | - | 1783 | - | - | - | - | - |
| Cyclohexane [g] | - | - | - | - | - | - | - | 1652 | - | - | - | - |
| 2,2-bis(tert-butylperoxy)butane (50% by weight in liquid paraffin) [g] | 82.0 | 94.1 | 79.5 | 79.1 | 71.9 | 60.5 | 76.6 | 98.3 | 99 | 20.1 | 58 | 30.1 |
| Conversion [%] | 98 | 95 | 96 | 97 | 100 | 97 | 95 | 96 | 98 | 93 | 72 | 56 |
| M_{w} [g/mol] | 14,795 | 15,965 | 15,384 | 12,702 | 9,421 | 10,990 | 10,204 | 11,613 | 23,150 | 7,456 | 10,989 | 15,400 |
| PDI | 2.84 | 2.92 | 2.66 | 2.69 | 2.25 | 2.72 | 2.57 | 2.67 | 3.41 | 4.57 | 2.43 | 3.13 |

| | | | | | | | | | | | | |
|---|---|---|---|---|---|---|---|---|---|---|---|---|
| ^{a} macromonomer is a (meth)acrylic acid ester of a hydroxylated hydrogenated polybutadiene with a hydrogenation degree of 99%. ^{b} relative to the total amount of monomers. ^{c} comparative example^{d}1,4-butadiene content: 80wt%, 1,2-butadiene content: 20wt%, based on the total weight to the polybutadiene. | | | | | | | | | | | | |

These examples demonstrate that by using a monomer composition according to the invention, random copolymers having a relatively low weight-average molecular weight and a relatively low polydispersity index can be obtained by solution polymerization with a high monomer conversion ratio.

Examples 1 to 8 further demonstrate that by restricting the monomer concentration to the preferred range of 20 to 45 % by weight, copolymers with a weight-average molecular weight of 8,000 to 20,000 g/mol and a low polydispersity index in the range of 2.2 to 3.2 can be obtained.

## Claims

1. A process for preparing a random copolymer, the process comprising the steps of
(i) preparing a monomer composition comprising:
(a) 5 to 55 mol-% of one or more conjugated dienes having 6 carbon atoms or less per molecule;
(b) 5 to 45 mol-% of one or more C₁-C₆ alkyl(meth)acrylates;
(c) 10 to 70 mol-% of one or more C₇-C₂₄ alkyl(meth)acrylates;
(d) 0 to 10 mol-% of one or more esters of (meth)acrylic acid and a hydroxylated hydrogenated polybutadiene; and
(e) 0 to 10 mol-% of one or more 1-alkenes comprising 6 to 16 carbon atoms, and
(f) 0 to 10 mol-% of monomers selected from the group consisting of styrene monomers having from 8 to 17 carbon atoms, vinyl esters having from 1 to 11 carbon atoms in the acyl group, vinyl ethers having from 1 to 10 carbon atoms in the alcohol group, dispersing oxygen- and/or nitrogen-functionalized monomers, heterocyclic (meth)acrylates, heterocyclic vinyl compounds, monomers containing a covalently bonded phosphorous atom, monomers containing epoxy groups and monomers containing halogens,
based on the total amount of monomers in the monomer composition,
(ii) providing a reaction mixture including the monomer composition prepared in step (i) and initiating radical polymerization in the reaction mixture to obtain a random copolymer,
wherein radical polymerization is performed as solution polymerization and the amount of monomer composition relative to the total weight of the reaction mixture in step (ii) is at least 20 % by weight,
wherein the amounts of components (a) to (f) add up to 100 mol-%, based on the total amount of monomers in the monomer composition, and
wherein the weight-average molecular weight of the random copolymer is in the range of 7,000 to 30,000 g/mol.

2. The process according to claim 1, wherein the monomer composition comprises
(a) 15 to 55 mol-% of one or more conjugated dienes having 6 carbon atoms or less per molecule;
(b) 10 to 40 mol-% of one or more C₁-C₆ alkyl(meth)acrylates;
(c) 15 to 55 mol-% of one or more C₇-C₂₄ alkyl(meth)acrylates;
(d) 0 to 5 mol-% of one or more esters of (meth)acrylic acid and a hydroxylated hydrogenated polybutadiene; and
(e) 0 to 5 mol-% of one or more 1-alkenes comprising 6 to 16 carbon atoms, and
(f) 0 to 6 mol-% of monomers (f) selected from styrene monomers having from 8 to 17 carbon atoms, hydroxyethyl(meth)acrylate, N,N-dimethylaminoethyl (meth)acrylate, N,N-dimethylaminopropyl (meth)acrylate or a mixture thereof,
based on the total amount of monomers in the monomer composition.

3. The process according to claim 1 or 2, wherein the random copolymer has a weight average-molecular weight of 8,000 to 20,000 g/mol.

4. The process according to any one of claims 1 to 3, wherein component (a) comprises butadiene or isoprene.

5. The process according to any one of claims 1 to 4, wherein component (b) comprises a mixture of methyl (meth)acrylate and butyl (meth)acrylate.

6. The process according to any one of claims 1 to 5, wherein component (c) comprises one or more C₁₀-C₁₆ alkyl(meth)acrylates.

7. The process according to any one of claims 1 to 6, wherein the random copolymer has a PDI of 1.5 to 6, preferably 2 to 4, and more preferably 2.2 to 3.2.

8. The process according to any one of claims 1 to 7, wherein the sum of all components (a) to (d) adds up to at least 90 mol-%, more preferably at least 95 mol-%, most preferably to 100 mol-%, based on the total amount of monomers in the monomer composition.

9. The process according to any one of claims 1 to 8, wherein the amount of monomer composition relative to the total weight of the reaction mixture in step (ii) is 20 to 45 % by weight.

10. The process according to any one of claims 1 to 9, wherein the reaction mixture in step (ii) comprises a solubilizing carrier medium, wherein the solubilizing carrier medium is preferably selected from the group consisting of mineral oils, synthetic oils, ketones, ester solvents, aromatic hydrocarbons, cycloaliphatic hydrocarbons and aliphatic hydrocarbons or mixtures thereof.

11. The process according to any one of claims 1 to 10, wherein step (ii) is carried out in the presence of one or more radical initiators, preferably selected from the group consisting of peroxide initiators and azo initiators or mixtures thereof.

12. The process according to any one of claims 1 to 11, wherein the monomer conversion is 80% or more in relation to the total weight of the monomer composition.

13. The process according to any one of claims 1 to 12, further comprising as step (iii) hydrogenation of the random copolymer.

14. The process according to claim 13, wherein hydrogenation is performed using a carbon-supported Pd catalyst.

## Patentansprüche

1. Verfahren zur Herstellung eines statistischen Copolymers, wobei das Verfahren folgende Schritte umfasst:
(i) Herstellen einer Monomerenzusammensetzung, umfassend:
(a) 5 bis 55 Mol-% eines oder mehrerer konjugierter Diene mit 6 Kohlenstoffatomen oder weniger pro Molekül;
(b) 5 bis 45 Mol-% eines oder mehrerer C₁-C₆-Alkyl(meth)acrylate;
(c) 10 bis 70 Mol-% eines oder mehrerer C₇-C₂₄-Alkyl(meth)acrylate;
(d) 0 bis 10 Mol-% eines oder mehrerer Ester von (Meth)acrylsäure und einem hydroxylierten hydrierten Polybutadien und
(e) 0 bis 10 Mol-% eines oder mehrerer 1-Alkene mit 6 bis 16 Kohlenstoffatomen und
(f) 0 bis 10 Mol-% von Monomeren aus der Gruppe bestehend aus Styrolmonomeren mit 8 bis 17 Kohlenstoffatomen, Vinylestern mit 1 bis 11 Kohlenstoffatomen in der Acylgruppe, Vinylethern mit 1 bis 10 Kohlenstoffatomen in der Alkoholgruppe, dispergierenden sauerstoff- und/oder stickstofffunktionalisierten Monomeren, heterocyclischen (Meth)acrylaten, heterocyclischen Vinylverbindungen, Monomeren mit einem kovalent gebundenen Phosphoratom, Epoxidgruppen enthaltenden Monomeren und Halogene enthaltenden Monomeren,
bezogen auf die Gesamtmenge an Monomeren in der Monomerenzusammensetzung,
(ii) Bereitstellen einer Reaktionsmischung, die die in Schritt (i) hergestellte Monomerenzusammensetzung enthält, und Initiieren von Radikalpolymerisation in der Reaktionsmischung zum Erhalt eines statistischen Copolymers,
wobei die Radikalpolymerisation als Lösungspolymerisation durchgeführt wird und die Menge an Monomerenzusammensetzung, bezogen auf das Gesamtgewicht der Reaktionsmischung in Schritt (ii), mindestens 20 Gew.-% beträgt,
wobei die Summe der Komponenten (a) bis (f) 100 Mol-%, bezogen auf die Gesamtmenge an Monomeren in der Monomerenzusammensetzung, ergibt und
wobei das gewichtsmittlere Molekulargewicht des statistischen Copolymers im Bereich von 7000 bis 30.000 g/mol liegt.

2. Verfahren nach Anspruch 1, wobei die Monomerenzusammensetzung Folgendes umfasst:
(a) 15 bis 55 Mol-% eines oder mehrerer konjugierter Diene mit 6 Kohlenstoffatomen oder weniger pro Molekül;
(b) 10 bis 40 Mol-% eines oder mehrerer C₁-C₆-Alkyl(meth)acrylate;
(c) 15 bis 55 Mol-% eines oder mehrerer C₇-C₂₄-Alkyl(meth)acrylate;
(d) 0 bis 5 Mol-% eines oder mehrerer Ester von (Meth)acrylsäure und einem hydroxylierten hydrierten Polybutadien und
(e) 0 bis 5 Mol-% eines oder mehrere 1-Alkene mit 6 bis 16 Kohlenstoffatomen und
(f) 0 bis 6 Mol-% von Monomeren (f) ausgewählt aus Styrolmonomeren mit 8 bis 17 Kohlenstoffatomen, Hydroxyethyl(meth)acrylat, N,N-Dimethylaminoethyl(meth)acrylat, N,N-Dimethylaminopropyl(meth)acrylat oder einer Mischung davon,
bezogen auf die Gesamtmenge an Monomeren in der Monomerenzusammensetzung.

3. Verfahren nach Anspruch 1 oder 2, wobei das statistische Copolymer ein gewichtsmittleres Molekulargewicht von 8000 bis 20.000 g/mol aufweist.

4. Verfahren nach einem der Ansprüche 1 bis 3, wobei Komponente (a) Butadien oder Isopren umfasst.

5. Verfahren nach einem der Ansprüche 1 bis 4, wobei Komponente (b) eine Mischung von Methyl(meth)acrylat und Butyl(meth)acrylat umfasst.

6. Verfahren nach einem der Ansprüche 1 bis 5, wobei Komponente (c) ein oder mehrere C₁₀-C₁₆-Alkyl (meth)-acrylate umfasst.

7. Verfahren nach einem der Ansprüche 1 bis 6, wobei das statistische Copolymer einen PDI von 1,5 bis 6, bevorzugt 2 bis 4 und weiter bevorzugt 2,2 bis 3,2 aufweist.

8. Verfahren nach einem der Ansprüche 1 bis 7, wobei die Summe aller Komponenten (a) bis (d) mindestens 90 Mol-%, weiter bevorzugt mindestens 95 Mol-%, ganz besonders bevorzugt 100 Mol-%, bezogen auf die Gesamtmenge an Monomeren in der Monomerenzusammensetzung, ergibt.

9. Verfahren nach einem der Ansprüche 1 bis 8, wobei die Menge an Monomerenzusammensetzung, bezogen auf das Gesamtgewicht der Reaktionsmischung in Schritt (ii), 20 bis 45 Gew.-% beträgt.

10. Verfahren nach einem der Ansprüche 1 bis 9, wobei die Reaktionsmischung in Schritt (ii) ein lösungsvermittelndes Trägermedium umfasst, wobei das lösungsvermittelnde Trägermedium bevorzugt aus der Gruppe bestehend aus Mineralölen, synthetischen Ölen, Ketonen, Ester-Lösungsmitteln, aromatischen Kohlenwasserstoffen, cycloaliphatischen Kohlenwasserstoffen und aliphatischen Kohlenwasserstoffen oder Mischungen davon ausgewählt ist.

11. Verfahren nach einem der Ansprüche 1 bis 10, wobei Schritt (ii) in Gegenwart eines oder mehrerer Radikalinitiatoren, vorzugsweise ausgewählt aus der Gruppe bestehend aus Peroxid-Initiatoren und AzoInitiatoren oder Mischungen davon, durchgeführt wird.

12. Verfahren nach einem der Ansprüche 1 bis 11, wobei der Monomeren Umsatz 80 % oder mehr, bezogen auf das Gesamtgewicht der Monomerenzusammensetzung, beträgt.

13. Verfahren nach einem der Ansprüche 1 bis 12, ferner umfassend als Schritt (iii) die Hydrierung des statistischen Copolymers.

14. Verfahren nach Anspruch 13, wobei die Hydrierung unter Verwendung eines auf Kohle geträgerten Pd-Katalysators durchgeführt wird.

## Revendications

1. Procédé pour la préparation d'un copolymère statistique, le procédé comprenant les étapes de
(i) préparation d'une composition de monomères comprenant :
(a) 5 à 55 % en moles d'un ou plusieurs diènes conjugués possédant 6 atomes de carbone ou moins par molécule ;
(b) 5 à 45 % en moles d'un ou plusieurs (méth) acrylates d'alkyle en C₁₋₆ ;
(c) 10 à 70 % en moles d'un ou plusieurs (méth) acrylates d'alkyle en C₇₋₂₄ ;
(d) 0 à 10 % en moles d'un ou plusieurs esters d'acide (méth)acrylique et d'un polybutadiène hydrogéné hydroxylé ; et
(e) 0 à 10 % en moles d'un ou plusieurs 1-alcènes comprenant 6 à 16 atomes de carbone, et
(f) 0 à 10 % en moles de monomères choisis dans le groupe constitué par des monomères de type styrène possédant de 8 à 17 atomes de carbone, des esters de vinyle possédant de 1 à 11 atomes de carbone dans le groupe acyle, des éthers de vinyle possédant de 1 à 10 atomes de carbone dans le groupe alcool, des monomères dispersants fonctionnalisés par oxygène et/ou fonctionnalisés par azote, des (méth)acrylates hétérocycliques, des composés vinyliques hétérocycliques, des monomères contenant un atome de phosphore lié de manière covalente, des monomères contenant des groupes époxy et des monomères contenant des halogènes,
sur la base de la quantité totale de monomères de la composition de monomères,
(ii) mise à disposition d'un mélange réactionnel comportant la composition de monomères préparée dans l'étape (i) et initiation d'une polymérisation radicalaire dans le mélange réactionnel pour obtenir un copolymère statistique,
une polymérisation radicalaire étant réalisée comme polymérisation en solution et la quantité de composition de monomères par rapport au poids total du mélange réactionnel dans l'étape (ii) étant d'au moins 20 % en poids,
les quantités des composants (a) à (f) totalisant 100 % en moles, sur la base de la quantité totale de monomères dans la composition de monomères, et le poids moléculaire moyen en poids du copolymère statistique étant dans la plage de 7 000 à 30 000 g/mole.

2. Procédé selon la revendication 1, la composition de monomères comprenant
(a) 15 à 55 % en moles d'un ou plusieurs diènes conjugués possédant 6 atomes de carbone ou moins par molécule ;
(b) 10 à 40 % en moles d'un ou plusieurs (méth) acrylates d'alkyle en C₁₋₆ ;
(c) 15 à 55 % en moles d'un ou plusieurs (méth) acrylates d'alkyle en C₇₋₂₄ ;
(d) 0 à 5 % en moles d'un ou plusieurs esters d'acide (méth)acrylique et d'un polybutadiène hydrogéné hydroxylé ; et
(e) 0 à 5 % en moles d'un ou plusieurs 1-alcènes comprenant 6 à 16 atomes de carbone, et
(f) 0 à 6 % en moles de monomères (f) choisis parmi des monomères de type styrène possédant de 8 à 17 atomes de carbone, un (méth)acrylate d'hydroxyéthyle, un (méth)acrylate de N,N-diméthylaminoéthyle, un (méth)acrylate de N,N-diméthylaminopropyle ou un mélange correspondant,
sur la base de la quantité totale de monomères dans la composition de monomères.

3. Procédé selon la revendication 1 ou 2, le copolymère statistique possédant un poids moléculaire moyen en poids de 8 000 à 20 000 g/mole.

4. Procédé selon l'une quelconque des revendications 1 à 3, le composant (a) comprenant du butadiène ou de l'isoprène.

5. Procédé selon l'une quelconque des revendications 1 à 4, le composant (b) comprenant un mélange de (méth)acrylate de méthyle et de (méth)acrylate de butyle.

6. Procédé selon l'une quelconque des revendications 1 à 5, le composant (c) comprenant un ou plusieurs (méth) acrylates d'alkyle en C₁₀₋₁₆.

7. Procédé selon l'une quelconque des revendications 1 à 6, le copolymère statistique possédant un PDI de 1,5 à 6, préférablement de 2 à 4, et plus préférablement de 2,2 à 3,2.

8. Procédé selon l'une quelconque des revendications 1 à 7, la somme de tous les composants (a) à (d) totalisant au moins 90 % en moles, plus préférablement au moins 95 % en moles, le plus préférablement 100 % en moles, sur la base de la quantité totale de monomères dans la composition de monomères.

9. Procédé selon l'une quelconque des revendications 1 à 8, la quantité de composition de monomères par rapport au poids total du mélange réactionnel dans l'étape (ii) étant de 20 à 45 % en poids.

10. Procédé selon l'une quelconque des revendications 1 à 9, le mélange réactionnel dans l'étape (ii) comprenant un milieu porteur solubilisant, le milieu porteur solubilisant étant préférablement choisi dans le groupe constitué par des huiles minérales, des huiles synthétiques, des cétones, des solvants de type ester, des hydrocarbures aromatiques, des hydrocarbures cycloaliphatiques et des hydrocarbures aliphatiques ou des mélanges correspondants.

11. Procédé selon l'une quelconque des revendications 1 à 10, l'étape (ii) étant mise en œuvre en la présence d'un ou plusieurs initiateurs de radicaux, préférablement choisis dans le groupe constitué par des initiateurs de type peroxyde et des initiateurs de type azo ou des mélanges correspondants.

12. Procédé selon l'une quelconque des revendications 1 à 11, la conversion de monomères étant de 80 % ou plus par rapport au poids total de la composition de monomères.

13. Procédé selon l'une quelconque des revendications 1 à 12, comprenant en outre en tant qu'étape (iii) une hydrogénation du copolymère statistique.

14. Procédé selon la revendication 13, l'hydrogénation étant réalisée en utilisant un catalyseur de Pd supporté sur carbone.
